# EUROPEAN PATENT APPLICATION

(11) **EP 1 479 599 A2**
(43) Date of publication of application: **24.11.2004**
(21) Application number: 04010963.9
(22) Date of filing: 07.05.2004
(51) Int. Cl.: B62H 5/18

(54) **Mechanical safety device to temporarily block the wheels of vehicles**

(30) Priority: 20.05.2003 IT MI20031014
(71) Applicant: Guadagnino, Antonio, 35134 Padova (IT)
(72) Inventor: Guadagnino, Antonio, 35134 Padova (IT); Riccardo, Savin, 35134 Padova (IT)
(74) Representative: Lecce, Giovanni

(57) **Abstract**

A mechanical safety device to temporarily block the wheels of vehicles, particularly suitable to be applied to motorcycles provided with a braking system having at least one disc brake placed in correspondence with the forecarriage or the rear axle, said motorcycles comprising at least one braking disc (14-14') provided with holes or pass-through openings (16-32) associated to a caliper (18) and a fork (24) to which said caliper is connected through a support (20) or (20') obtained in one body with the same fork or added and fastened upon it. The mechanical safety device comprises a lock bolt or lock (10) which can be activated with a key or other suitable means integrated into said caliper (18) or into the relevant support (20-20') or into an independent support (32) obtained into one body with the same fork or added and fastened upon it and interacting with said disc (14-14').

## Description

The present invention refers to a mechanical safety device to temporarily block the wheels of vehicles.

More particularly, the present invention refers to a mechanical safety device to temporarily block the wheels of vehicles particularly suitable to be applied to one or more wheels of motorcycles provided with a braking system with at least one disc brake placed in correspondence with the forecarriage and/or the rear axle.

The term "motorcycles", as used in the present description and in claims, refers to self-propelled means, generally two wheel means, but not limited to them, of any swept volume and provided with endothermic engine or being electrically propelled or through other known and suitable means, wherein at least one of the wheels is provided with one or more disc brake that can be at least partly accessed from the outside.

The device of the present invention can also advantageously be applied to means which are not strictly set into the motorcycle category, such as three wheel motorized vehicles that are generally used for competitive sports or for playing purposes and are provided with a braking systems with at least one disc, a relevant caliper integrating the braking linings or pads and the fork or similar support means for one wheel.

Moreover, the device of the present invention can also be applied on vehicles that are different from the ones listed above, which are not necessarily engine vehicles, provided that they are equipped with at least one disc brake with the relevant caliper installed in correspondence with one fork or the like supporting one wheel, both the front one and/or the rear one.

It is known that as far as motorcycles in particular but not exclusively are concerned, i.e. two wheel engine vehicles, the main need, for safety purposes against possible theft of the means, implies the arrangement of means suitable for preventing the improper use of the same vehicles. For this purpose, some types of these transport means are provided with advanced anti-theft devices similar to the ones installed on car vehicles constituted by electronic apparatus, for example of the "immobilizer" type that can be activated with the key the user owns.

Motorcycles are more usually equipped with a mechanical safety device configuring an anti-theft device which is generally constituted by a mobile lock bolt applied to one disc brake.

Said lock bolt usually defines a shaped metallic support integrating a lock provided with an extensible pin suitable to insert itself into a hole or pass-through opening present on the disc brake. The disc brakes of these kinds of vehicles are usually provided with a plurality of holes or pass-through openings which allow exhausting the heat generated by the friction of the pads or linings on the same disc and one of these holes, without distinction, can house the pin of the mentioned lock bolt.

This known solution, which is simple from the structural point of view, is not exempt from relevant drawbacks.

The lock bolt, in fact, cannot avoid the partial movement of the motorcycle as it does not block the disc brake and the relevant wheel; a relative movement, even though lower than a complete revolution, can be carried out as the lock bolt performs its blocking function of the means only when it matches with the caliper of the brake or the support fork of the wheel hub. The result is that, in case of theft attempt, the vehicle is moved and the lock bolt unavoidably collides with violence on the caliper of the brake or on the fork, this easily causes damages, even serious ones, to said components. The same drawback can occur in case the same user of the vehicle forgets that he/she has applied the lock bolt to the disc brake and once started the engine, he/she tries to set off.

Moreover, as the known lock bolts are constituted by a device to be applied when needed, they oblige to a series of interventions that, sometimes can be difficult and are a useless waste of time. In fact the lock bolt must be taken from the place wherein it is stored, applied to the disc brake and bolted with the key blocking the piston in extension. The operation is not prompt and it must be obviously repeated in the opposite direction when the user sets off again.

Moreover, the same lock bolts are unaesthetic and have a considerable weight, for this reason their use is scarcely appreciated.

Moreover, the known lock bolts applied by the user on motorcycles when required can burn the user's hands during the accidental contact with the overheated disc brake and, moreover, for the same contact with the disc or with the parts adjacent to it can dirty their hands, which are both necessarily implied into the operation.

Object of the present invention is to solve the above mentioned drawbacks.

More particularly, object of the present invention is the provision of a mechanical safety device to temporarily lock the wheels of vehicles provided with at least one disc brake, especially for motorcycles, suitable to steadily lock the vehicle, thus avoiding the possibility of relative movements between said disc brake and one or more of the following elements: caliper brake, relative support and fork with the wheel hub.

Relative movements are not intended to be the minor ones due to the presence of a caliper and/or of a floating disc.

A further object of the invention is the provision of a mechanical safety device as defined above being consequently suitable to avoid accidental damages to the caliper brake or to the fork.

A further object of the invention is the provision of a mechanical safety device that can be immediately enabled and disabled by the user with the simple movement of one hand.

Another object of the invention is the provision of a mechanical safety device that can avoid harmful contacts between the user's hands and overheated and/or dirty parts of the vehicle.

A further object of the invention is the provision of a mechanical safety device with a limited weight and that is not unaesthetic.

A further object of the invention is the provision of a mechanical safety device to temporarily block the wheels of vehicles provided with at least one disc brake, especially motorcycles, that can assure a high resistance and reliability level in time and that it is easily manufactured and at a low price.

According to the present invention, these and other purposes are obtained from a mechanical safety device particularly suitable to be applied on motorcycles provided with at least one braking disc with at least one disc brake placed in correspondence with the forecarriage or the rear axle, said motorcycles comprising at least one braking disc provided with holes or pass-through openings associated to a caliper and fork to which said caliper is connected through a support obtained in one body with the same fork or added and fastened upon it; wherein said mechanical device comprises a lock bolt or lock that can be activated with a key or other suitable means integrated into said caliper or into the relevant support or into an independent support obtained into one body with the same fork or added and fastened to it interacting with said disc.

The manufacturing and functional features of the mechanical safety device of the present invention will be better highlighted from the following description wherein reference is made to the attached tables of drawings representing some preferred and non-limitative embodiments wherein:
Figure 1 is a perspective schematic view from the front end of a disc brake with the relevant caliper of a motorcycle or the like and of the mechanical safety device of the present invention interacting with said disc brake according to a first embodiment;
Figure 2 is a perspective schematic view from the opposite rear end of the same disc brake with the relevant caliper and of the mechanical safety device of the previous Figure 1;
Figure 3 is a perspective schematic view from the front end of a disc brake with the relevant caliper of a motorcycle or the like and of the mechanical safety device of the present invention interacting with said disc brake according to a second alternative embodiment;
Figure 4 is a perspective schematic view from the opposite rear end of the same disc brake and mechanical safety device of Figure 3;
Figure 5 is a perspective schematic view from the front end of a disc brake with relevant caliper of a motorcycle or the like and of the mechanical safety device of the present invention interacting with said disc brake, according to a further embodiment;
Figure 6 is a perspective schematic view from the opposite rear end of the same disc brake and mechanical safety device of Figure 5;
Figure 7 is a perspective schematic view from the front end of a disc brake with relevant caliper of a motorcycle or the like and of the mechanical safety device interacting with said disc brake, according to a further embodiment;
Figure 8 is a perspective schematic view from the opposite rear end of the same disc brake and mechanical safety device of Figure 7;
Figure 9 is a partial side schematic view of said disc brake and mechanical safety device of the previous Figures highlighting the interaction system between the mechanical safety device of the present invention and the disc brake of a motorcycle or the like;
Figure 10 is a schematic perspective view of an alternative embodiment of the safety device concerning the position in correspondence with the rear disc brake of a motorcycle or the like;
Figure 11 is a perspective schematic view of a further embodiment of the safety device concerning its position.

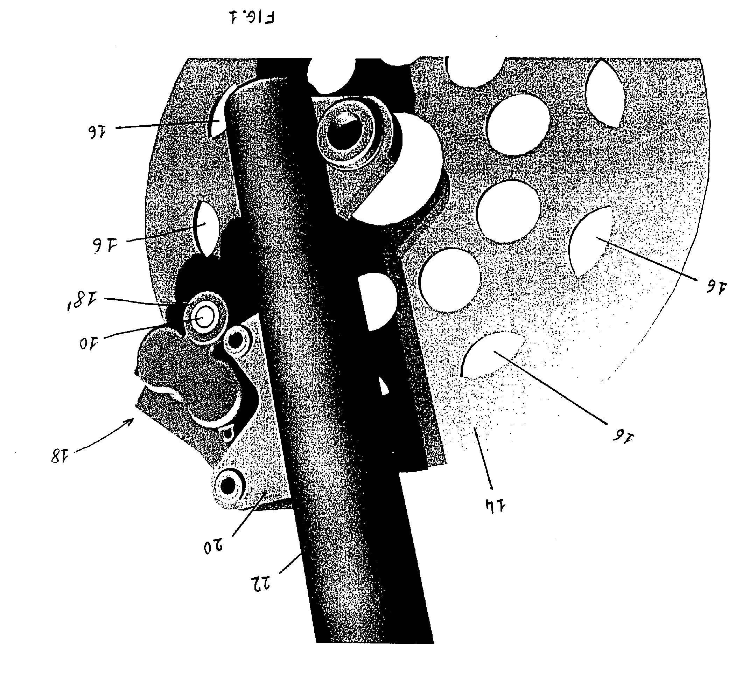

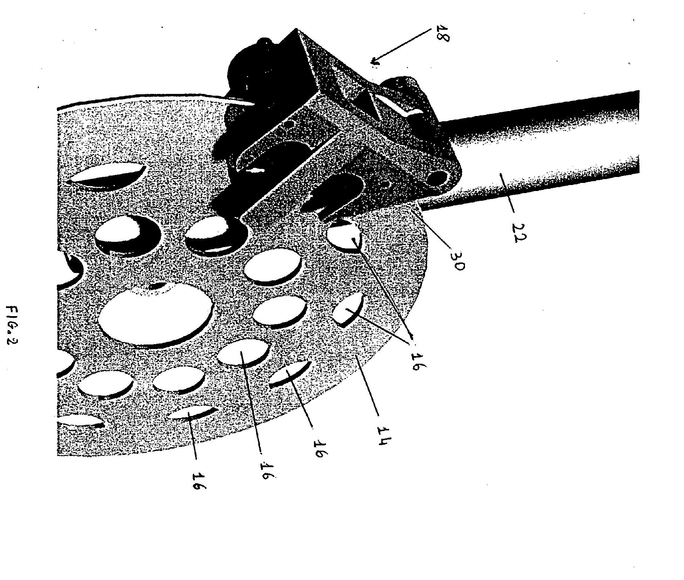

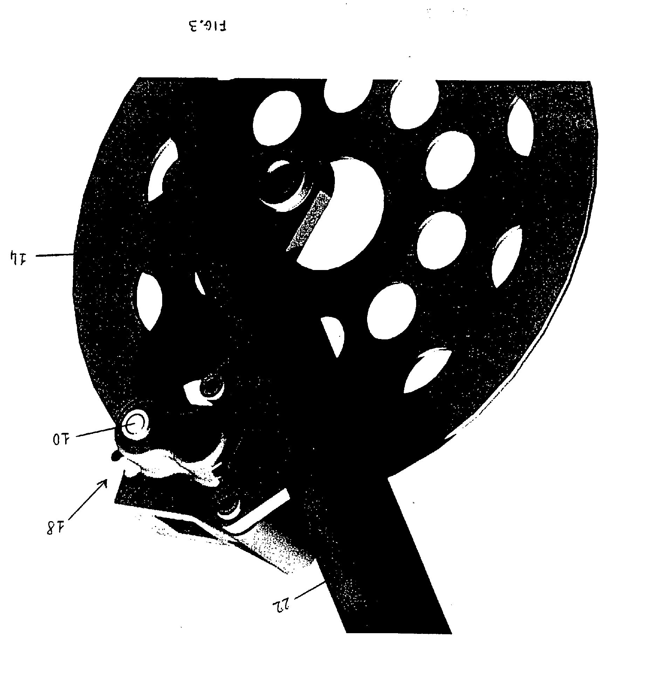

With reference to the mentioned Figures and particularly to Figures 1, 2 and 9, the mechanical safety device according to the present invention comprises a lock bolt or lock 10, provided with a pin or rod appendix 12 being shaped if required and projecting from one end of its conventional containment case for the effect of the movement induced by a key or equivalent driving or control means. Said appendix 12 of the lock bolt 10 is substantially oriented into an orthogonal direction compared to the geometric plan of a known disc brake 14 of a two or more wheel vehicle, usually a motorcycle, and it is suitable to at least partly insert itself in one of the holes or pass-through openings 16 that are transversally created into the same disc brake 14. Said holes 16 can consist of radial passages that are conventionally created into the mentioned disc in order to disperse the heat deriving from the friction of the breaking linings or pads or into proper pass-through openings obtained along the side surface of the same disc, preferably along or near its peripheral area. According to the invention, the lock bolt 10 is advantageously integrated into one of the components of the vehicle forming the braking system and/or part of the connection means of at least one wheel of it and/or to other elements that are integral to the fork that will be described here below. Said components of the braking system, that according to the types of vehicles can be present into the front part and/or into the rear one, are constituted by the cited disc 14 and also by a caliper 18 housing the braking linings or pads (which are not represented) and by the relevant support marked with 20 and integral to the fork 24.

The part of the connection means to at least one wheel of the vehicle is generally constituted by the terminal end 22 of the fork 24 including a support 26 for the wheel hub.

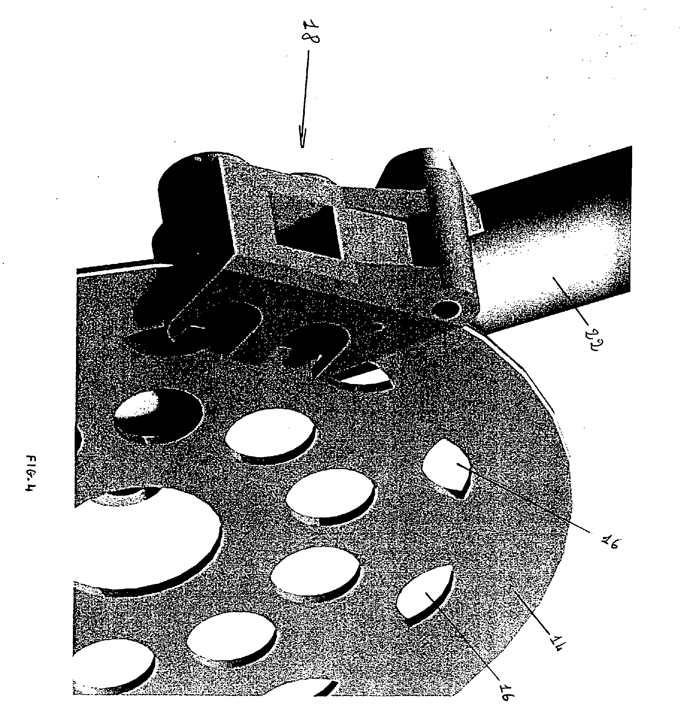

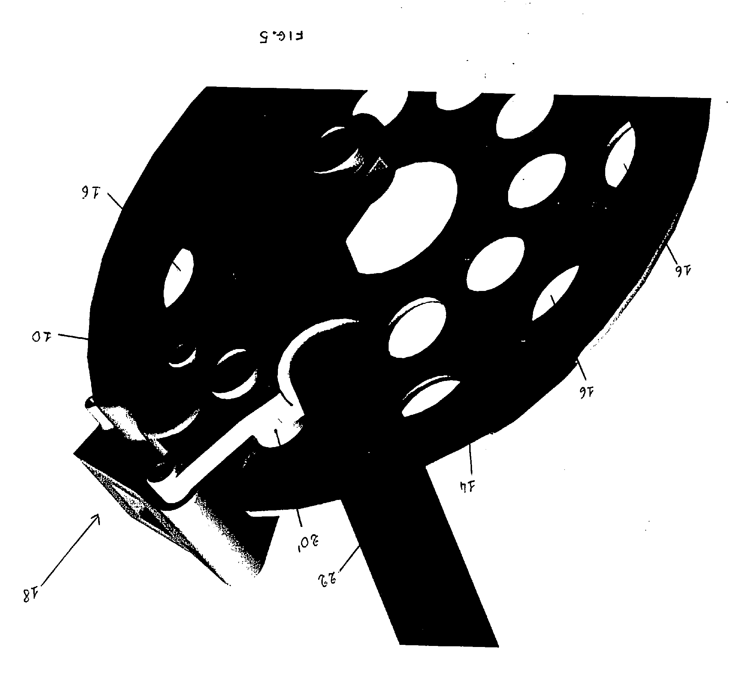

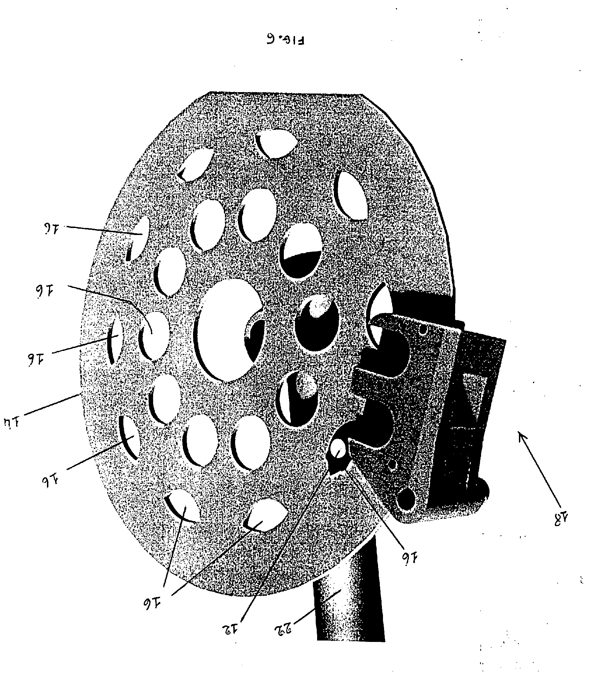

In the embodiment shown in Figures 1 and 2, the lock bolt or lock 10 is integrated into the caliper 18 which for the purpose is provided with a shaped projecting appendix 18', for example a cylindrical shaped one, which is preferably jointly obtained with the rest of the body.

Said appendix is obtained on the caliper 18 and it is substantially directed towards the central area of the disc brake 14. The lock 10, for example a cam one or a combination one of the Yale type, is steadily fastened into the appendix 18' of the caliper 18 with known means, that are for example constituted by threading and/or soldering, keys or other suitable systems. The external end of said lock is provided with a slot for the insertion of a usual driving or control key of the mobile element of the same lock, constituted by the pin or rod 12 which is oriented into an orthogonal direction compared to the disc brake 14.

According to a preferred and non-limitative embodiment, the caliper 18 connected to the support 20 is provided with at least one seat shaped keyhole 30 on the internal end opposite to the one wherein the key is inserted, whose profile is at least partly complementary to the one of the rod or pin 12.

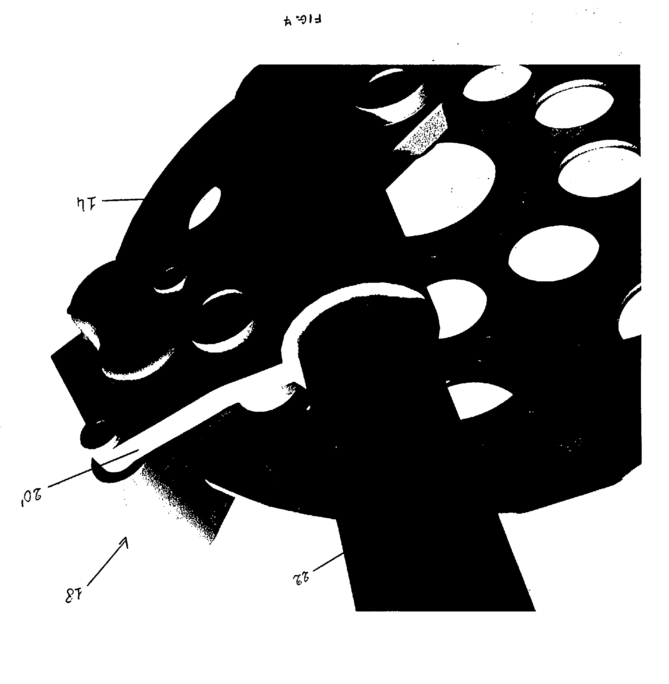

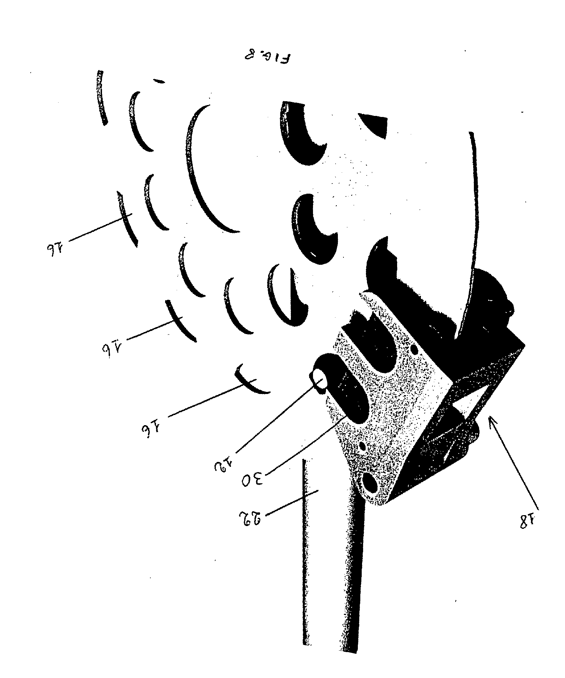

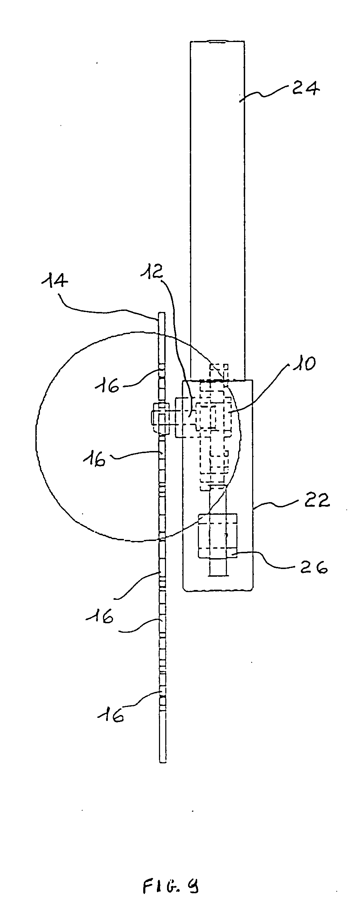

Figures 3 and 4 refer to an alternative embodiment of the mechanical safety device of the present invention. According to this solution, the lock 10 is integrated into the caliper 18 in such a position to align its rod or pin 12 with the known hydraulic piston being part of the brake system and integrated into the same caliper. Therefore, the activation by key of the lock 10, leads said pin 12 to compress the mentioned hydraulic piston, using for example a screw mechanism to reduce the required strength. The hydraulic piston, in its turn, moves the braking pads or linings so that they approach and tighten on the disc 14, with an action being substantially identical to the one caused by the user who brakes with the lever or the pedal of the vehicle.

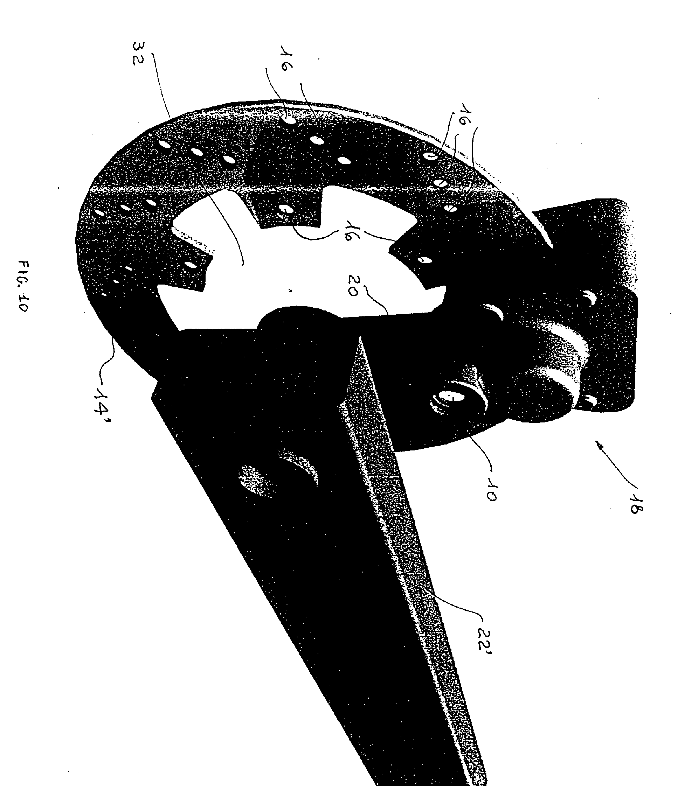

Figures 5, 6 and 7, 8 refer to further embodiments of the mechanical safety device of the present invention that particularly refer to the position of the lock bolt 10 along the braking system of the vehicle in its whole.

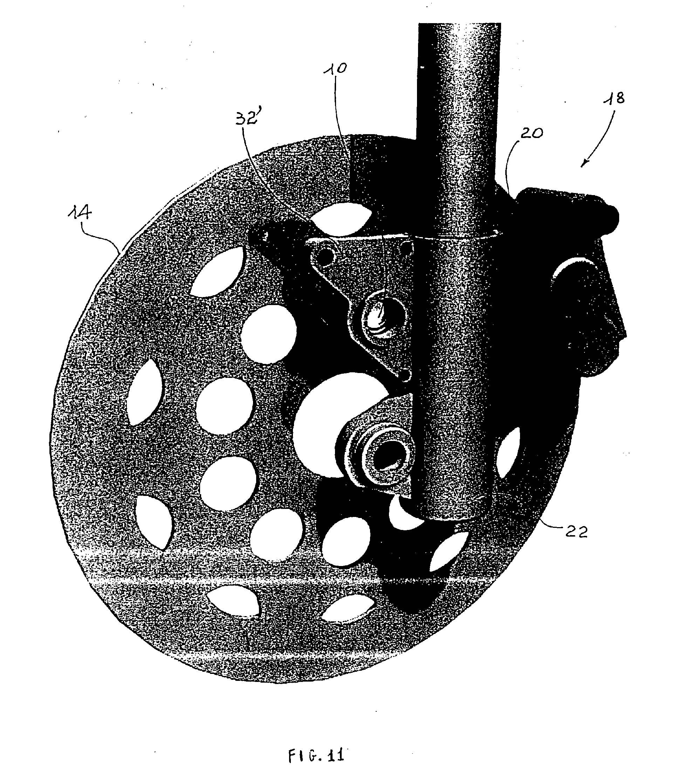

In these cases, with respect to the previously described embodiments, said lock bolt 10 with relevant rod or pin 12 engaging with the disc 14 is integrated and fastened with known means into the support of the caliper 18. Said support, marked with 20' in Figures 5 and 7, is alternatively constituted by an independent plate-shaped body fastened to the fork 24 by soldering or equivalent means (as shown in Figure 5), or it is constituted by a similar plate-shaped body obtained in one piece by moulding, die casting or the like, with the same fork, preferably with its terminal end 22 adjacent to the disc brake 14. In both cases, the pin or rod 12 of the lock bolt 10 is suitable to insert itself into one of the pass-through openings 16 created on said disc 14, in a way which is similar to the first embodiment described above. The rod or pin 12 is schematised in Figures 6 and 8 in an exposed position, i.e. to engage with one of the pass-through openings 16 of the disc brake 14.

The Figure 10 schematically shows the embodiment according to which the lock bolt 10 is applied in correspondence with one rear disc brake of a motorcycle or the like. Said disc, marked with 14', shows, by way of example, a different configuration compared to the ones shown in Figures from 1 to 8, as it is centrally provided with an extended peripherally shaped opening 32 and with a plurality of small holes, similar to the openings 16 of the previous Figures and therefore marked with the same reference number. According to this embodiment said lock bolt 10 is integrated into the caliper brake 18 which is connected by the support 20 to the rear fork of the vehicle, schematised with 22'; the pin or rod 12 of the lock bolt 10 can insert itself into one of the holes 16 of the disc 14'.

The Figure 11 schematically shows the embodiment according to which the lock bolt 10 is borne by an independent support marked with 32', i.e. having different or unrelated functions from the supporting one for the caliper 18. Said support 32', obtained in one body with the fork 22 or added and fastened upon it with known means, can be arranged with the unique purpose of housing the mentioned lock bolt 10 or it can also be used to connect and/or fasten parts of the vehicle body such as a fender.

As can be seen from the previous description, the advantages obtained by the invention are clear.

In all the described embodiments, the mechanical safety device of the present invention allows steadily blocking the wheel of the vehicle to which it is applied, thus avoiding any relative movement between the disc brake and one or more of the following elements: caliper-brake, relative support and fork bearing the wheel hub. This blocking is easily and promptly obtained through the key of the lock and it is not dangerous for the user's hands that do not get in touch with overheated or dirty parts of the means.

The blocking obtained in this way excludes any damage of the caliper-brake or of the fork, as the mechanical safety device is directly integrated into said caliper or into the relevant support.

Moreover, said device does not alter the appearance of the vehicle as it is built into one of the mentioned components.

The device of the present invention is an efficient safety apparatus against theft and it also acts as a hand brake, this function is particularly useful when the motorcycle is parked along sloping routes or grounds.

Even though the present invention has been described with reference to some embodiments which are given by way of non limitative example, many changes and variations will be apparent to a technician skilled in the art according to the above-mentioned description. For example, the device can also be integrated into the support of the wheel hub. It is therefore understood that the present invention is meant to comprise all changes and variations falling within the spirit and the protective scope of the following claims.

## Claims

1. A mechanical safety device to temporarily block the wheels of vehicles being particularly applied to motorcycles provided with a braking system having at least one disc brake placed in correspondence with the forecarriage or the rear axle, said motorcycles comprising at least one braking disc (14-14') provided with holes or pass-through openings (16-32) associated to a caliper (18) and a fork (24) to which said caliper is connected through a support (20-20') obtained in one body with the same fork or added and fastened upon it, **characterized in that** it comprises a lock bolt or a lock (10) that can be activated with a key or other suitable means, integrated into said caliper (18) or into the relevant support (20-20') or into an independent support (32) obtained in one body with the same fork or added and fastened upon it and interacting with said disc (14-14').

2. The mechanical safety device according to claim 1, **characterized in that** the lock bolt (10) comprises at least one pin or rod (12) being oriented into a substantially orthogonal direction compared to the disc (14-14') and moved into this direction through said key to be inserted into one of the holes (16) that are obtained upon it or to activate the hydraulic piston placed into the caliper (18).

3. The mechanical device according to claim 1 or 2, **characterized in that** the caliper (18) is provided with at least one seat or shaped keyhole (30) on the opposite end compared to the one wherein the key is inserted into the lock bolt (10), whose profile is at least partly complementary to the one of the pin or rod (12).

4. The mechanical device according to any of the previous claims, **characterized in that** the lock bolt (10) is integrated and fastened into a shaped appendix (18') being jointly obtained with the caliper (18) and oriented towards the central area of the disc (14-14').

5. The mechanical device according to any of the previous claims, **characterized in that** the lock bolt (10) is of the Yale type, or a cam one, or a combination one.

6. The mechanical device according to any of the previous claims, **characterized in that** the lock bolt (10) is connected to an independent support (32') obtained into one body with the fork (22) or added and fastened upon it.
